# EUROPÄISCHE PATENTANMELDUNG

(11) **EP 3 588 013 A1**
(43) Veröffentlichungstag der Anmeldung: **01.01.2020**
(21) Anmeldenummer: 18450006.4
(22) Anmeldetag: 26.06.2018
(51) Int. Cl.: G01D 4/00

(54) **VERFAHREN ZUR ABGABE VON ELEKTRISCHER ENERGIE**

(71) Anmelder: XelectriX Power GmbH, 4310 Mauthausen (AT)
(72) Erfinder: Hartl, Alexander, A-4060 Leonding (AT)
(74) Vertreter: Keschmann, Marc

(57) **Zusammenfassung**

Bei einem Verfahren zur Abgabe von elektrischer Energie an elektrische Verbraucher (10) unter Verwendung wenigstens einer an ein Stromversorgungsnetz (6) angeschlossenen Stromabgabevorrichtung (9), an welche ein elektrischer Verbraucher (10) über ein Kabel (12) anschließbar ist, wobei der Stromverbrauch des elektrischen Verbrauchers (10) gemessen und der gemessene Stromverbrauch an eine Verrechnungsstelle (1) übermittelt wird, ist dem Verbraucher (10) eine Verbraucherkennung (11₂) zugeordnet, die über das Kabel (12) an die Stromabgabevorrichtung (9) und weiter an die Verrechnungsstelle (1) übermittelt wird, wobei in der Verrechnungsstelle (1) überprüft wird, ob die Verbraucherkennung (11₂) einem in der Verrechnungsstelle (1) gespeicherten Teilnehmer (2₂) zugeordnet ist und bei positiver Prüfung ein Freigabesignal an die Stromabgabevorrichtung (9) übermittelt wird, um die Stromabgabe durch die Stromabgabevorrichtung (9) freizugeben, wobei ein dem Teilnehmer zugeordnetes Verrechnungskonto (3₂) mit dem gemessenen Stromverbrauch belastet wird.

## Beschreibung

Die Erfindung betrifft ein Verfahren zur Abgabe von elektrischer Energie an elektrische Verbraucher unter Verwendung wenigstens einer an ein Stromversorgungsnetz angeschlossenen Stromabgabevorrichtung, an welche ein elektrischer Verbraucher über ein Kabel anschließbar ist, wobei der Stromverbrauch des elektrischen Verbrauchers gemessen und der gemessene Stromverbrauch an eine Verrechnungsstelle übermittelt wird.

Die Erfindung betrifft weiters eine Stromabgabevorrichtung, insbesondere zur Durchführung des erfindungsgemäßen Verfahrens, umfassend einen Stromeinspeiseanschluss zum Anschließen der Stromabgabevorrichtung an ein Stromversorgungsnetz, einen Stromabgabeanschluss zum Anschließen eines elektrischen Verbrauchers an die Stromabgabevorrichtung, Schaltmittel zum wahlweisen Freigeben oder Unterbrechen des Stromflusses vom Stromeinspeiseanschluss zum Stromabgabeanschluss, eine Messschaltung zur Messung des Stromverbrauchs des angeschlossenen Verbrauchers und eine Steuerschaltung zum Ansteuern der Schaltmittel.

Die Erfindung betrifft außerdem ein System zur Abgabe von elektrischer Energie an elektrische Verbraucher, insbesondere zur Durchführung des erfindungsgemäßen Verfahrens, umfassend eine an ein Stromversorgungsnetz anschließbare erfindungsgemäße Stromabgabevorrichtung und eine als Verrechnungsstelle ausgebildete Datenverarbeitungseinrichtung.

Bei der Versorgung von elektrischen Verbrauchern mit elektrischer Energie bzw. der Abgabe von elektrischer Energie an elektrische Verbraucher durch ein Energieversorgungsunternehmen erfolgt die Messung des Stromverbrauchs durch Stromzähler, wobei je Haushalt bzw. je Abrechnungsstelle ein Stromzähler vorgesehen ist. Die Messwerte des Stromzählers werden in bestimmten Abständen abgelesen und an eine Verrechnungsstelle übermittelt, welche das Verrechnungskonto des Teilnehmers, dem der betreffende Stromzähler zugeordnet ist, belastet. Im Falle von sog. intelligenten Stromzählern (Smart Meter) können die Messwerte über eine Datenschnittstelle per Fernauslesung vom Energieversorgungsunternehmen ausgelesen werden. Stromzähler erfassen automatisch den Stromverbrauch aller elektrischen Verbraucher die vom Stromversorgungsnetz aus gesehen hinter dem Stromzähler angeordnet sind. Es ist bei herkömmlichen Systemen daher nicht möglich, den Stromverbrauch einzelner elektrischer Verbraucher in der Verrechnungsstelle gesondert zu erfassen.

Im Rahmen des steigenden Interesses an der Elektromobilität besteht eine hohe Nachfrage an Ladestationen für Elektrofahrzeuge, wie z.B. Elektroautos, Elektromotorroller, Elektromotorräder und Elektrofahrräder. An öffentlichen Ladestationen wird der beim Aufladen von Elektrofahrzeugen entstandene Stromverbrauch erfasst und in der Regel dem jeweiligen Teilnehmer in Rechnung gestellt. Die Zahlung erfolgt bargeldlos entweder über eine Bankkarte, welche mittels einer Leseeinrichtung an der Ladestation ausgelesen wird, oder über eine vom Betreiber der Ladestation ausgestellte Kundenkarte, mittels welcher der Teilnehmer an der Ladeeinrichtung identifiziert wird, worauf ein dem Teilnehmer zugeordnetes Verrechnungskonto belastet wird. Der Investitions- und Verwaltungsaufwand für derartige Ladestationen ist jedoch hoch.

Es besteht daher Bedarf nach Möglichkeiten der Stromentnahme aus dem Stromversorgungsnetz, wie z.B. an Ladestationen für Elektrofahrzeuge, die geringe Investitionen erfordern und die eine einfache, möglichst automatische Verrechnung des verbrauchten Stroms an den jeweiligen Teilnehmer erlauben. Insbesondere soll die Möglichkeit eines sog. E-Roamings geschaffen werden, bei dem eine Stromentnahme und eine einfache Bezahlung des Stromverbrauchs durch einen Teilnehmer erfolgen können, der selbst keine vertragliche Beziehung mit dem Betreiber der Stromentnahmestelle eingegangen ist.

Zur Lösung dieser Aufgabe sieht die Erfindung bei einem Verfahren der eingangs genannten Art im Wesentlichen vor, dass dem Verbraucher eine Verbraucherkennung zugeordnet ist, die über das Kabel an die Stromabgabevorrichtung und weiter an die Verrechnungsstelle übermittelt wird, dass in der Verrechnungsstelle überprüft wird, ob die Verbraucherkennung einem in der Verrechnungsstelle gespeicherten Teilnehmer zugeordnet ist und bei positiver Prüfung ein Freigabesignal an die Stromabgabevorrichtung übermittelt wird, um die Stromabgabe durch die Stromabgabevorrichtung freizugeben, wobei ein dem Teilnehmer zugeordnetes Verrechnungskonto mit dem gemessenen Stromverbrauch belastet wird.

Die Erfindung ermöglicht die Erfassung des Stromverbrauchs eines einzelnen elektrischen Verbrauchers und die Verrechnung des Stromverbrauchs durch ein Stromversorgungsunternehmen, ohne dass dem elektrischen Verbraucher ein eigener Stromzähler des Stromversorgungsunternehmens zugeordnet sein muss. Vielmehr ist es ausreichend, wenn die Stromabgabevorrichtung in einem Stromnetz angeordnet ist, in dem sich eine Vielzahl von elektrischen Verbrauchern befindet, deren addierter Verbrauch durch einen einzelnen Stromzähler des Stromversorgungsunternehmens erfasst wird. Auf diese Weise wird es Privathaushalten oder Unternehmen mit herkömmlichem Stromzähler möglich, in ihrem Stromnetz Stromabgabevorrichtungen anzuordnen und externen Teilnehmern über eine Stromentnahme über die genannten Stromabgabevorrichtungen anzubieten, die dem jeweiligen externen Teilnehmer direkt, z.B. vom Stromversorgungsunternehmen, verrechnet wird. Die Zurechnung des Stromverbrauchs zu dem jeweiligen Teilnehmer erfolgt erfindungsgemäß mittels einer Verbraucherkennung, die dem an der Stromabgabevorrichtung über ein Kabel angeschlossenen elektrischen Verbraucher zugeordnet ist. Um eine Stromentnahme zu ermöglichen, muss eine Freigabe der Verbraucherkennung durch die Verrechnungsstelle, wie z.B. durch das Stromversorgungsunternehmen erfolgen, zu welchem Zweck die Verbraucherkennung an die Stromabgabevorrichtung und von der Stromabgabevorrichtung an die Verrechnungsstelle übermittelt wird. In der Verrechnungsstelle wird überprüft, ob die Verbraucherkennung einem in der Verrechnungsstelle gespeicherten Teilnehmer zugeordnet ist und bei positiver Prüfung wird ein Freigabesignal an die Stromabgabevorrichtung übermittelt, um die Stromabgabe durch die Stromabgabevorrichtung freizugeben. Der Stromverbrauch des elektrischen Verbrauchers wird durch geeignete Messeinrichtungen erfasst und das dem Teilnehmer zugeordnete Verrechnungskonto wird mit dem gemessenen Stromverbrauch belastet. Auf Grund der dem elektrischen Verbraucher zugeordneten Verbraucherkennung kann die Erfassung des Stromverbrauchs in verbraucherspezifischer Weise erfolgen, und dies auch in einem Stromnetz, das einen Stromzähler aufweist, der einem anderen Teilnehmer und daher einem anderen Verrechnungskonto zugeordnet ist.

Dadurch, dass die Übermittlung der Verbraucherkennung an die Stromabgabevorrichtung über das Kabel erfolgt, mit welchem der elektrische Verbraucher an die Stromabgabevorrichtung angeschlossen ist, sind keine gesonderten anderen Übertragungsmittel erforderlich als das ohnehin für die elektrische Energieübertragung bereits vorhandene Kabel.

Besonders bevorzugt wird die Verbraucherkennung über ein elektrisches Lastprofil übermittelt. Dies erlaubt eine besonders einfache und sichere Übertragung über das der elektrischen Energieversorgung des elektrischen Verbrauchers dienende Kabel. Das Ladeprofil kann hierbei als digitale oder analoge Codierung der Verbraucherkennung ausgebildet sein. Unter einem Ladeprofil wird im Rahmen der Erfindung eine charakteristische zeitliche Änderung einer elektrischen Größe, wie z.B. der Stromaufnahme, der Spannung oder dgl. verstanden.

Das Auslesen der Verbraucherkennung, insbesondere die Erfassung und Auswertung des Ladeprofils, kann in der Stromabgabevorrichtung oder in einer anderen Einrichtung des lokalen Stromnetzes erfolgen, wie z.B. im Stromzähler (insbesondere Smart Meter), über welchen das Stromnetz an das öffentliche Stromversorgungsnetz angeschlossen ist.

Nach dem Auslesen kann die weitere Übermittlung der Verbraucherkennung an die Verrechnungsstelle grundsätzlich beliebig erfolgen, bevorzugt unter Verwendung der von einem

### Smart Meter zur Verfügung gestellten

Datenübertragungstechnologie, wie z.B. PSTN (Public Switched Telephone Network, d.h. Festnetztelefonie), UMTS, GSM oder GPRS (Mobilfunk), LAN (lokales Netzwerk), PLC (Powerline Communication, d.h. Datenübertragung über das Stromnetz).

Die Messung des Stromverbrauchs des Verbrauchers kann bevorzugt in der Stromabgabevorrichtung oder im Verbraucher vorgenommen werden. Die entsprechenden Messwerte werden in der Folge an die Verrechnungsstelle übermittelt.

Eine besonders manipulationssichere Erfassung des Stromverbrauchs des elektrischen Verbrauchers gelingt bevorzugt dadurch, dass die Messung des Stromverbrauchs des Verbrauchers in der Stromabgabevorrichtung und zusätzlich im Verbraucher vorgenommen wird und dass der in der Stromabgabevorrichtung und der im Verbraucher gemessene Stromverbrauch verglichen wird und bei einer Abweichung eine Fehlermeldung ausgegeben und/oder die Stromabgabe durch die Stromabgabevorrichtung unterbrochen wird. Diese Vorgehensweise stellt sicher, dass ein missbräuchliches Abzweigen von elektrischer Energie auf Kosten des Teilnehmers im Bereich zwischen der Stromabgabevorrichtung und dem Verbraucher, z.B. durch Zwischenschalten einer Mehrfachsteckdose, zuverlässig entdeckt wird.

Eine bevorzugte Ausführung sieht vor, dass die Stromabgabevorrichtung im Messbereich eines Stromzählers angeordnet ist, dessen Messwerte der Verrechnungsstelle übermittelt werden und ein dem Stromzähler zugeordnetes Verrechnungskonto entsprechend den Messwerten belastet wird, wobei der Stromverbrauch des elektrischen Verbrauchers dem dem Stromzähler zugeordneten Verrechnungskonto gutgeschrieben wird. Durch eine derartige Vorgehensweise wird sichergestellt, dass der Stromverbrauch, mit dem der Teilnehmer belastet wird, dem der elektrische Verbraucher zugeordnet ist, demjenigen Teilnehmer gutgeschrieben wird, dessen Verrechnungskonto der Stromzähler zugeordnet ist, der den Stromverbrauch des gesamten Stromnetzes einschließlich des an die Stromabgabevorrichtung angeschlossenen Verbrauchers misst, damit eine doppelte Verrechnung vermieden wird.

Um sicherzustellen, dass der vom Verbraucher konsumierte Strom dem richtigen Verrechnungskonto gutgeschrieben wird, ist bevorzugt vorgesehen, dass dem Stromzähler eine Stromzählerkennung zugeordnet ist, die gemeinsam mit der Verbraucherkennung an die Verrechnungsstelle übermittelt wird.

Bevorzugt erfolgt die Übermittlung der Verbraucherkennung und ggf. der Stromzählerkennung an die Verrechnungsstelle, insbesondere von der Stromabgabevorrichtung an die Verrechnungsstelle, über das Stromversorgungsnetz (z.B. Power Line Communication) oder über ein mobiles Telekommunikationsnetz.

Gemäß einem weiteren Aspekt sieht die Erfindung eine Stromabgabevorrichtung vor, insbesondere zur Durchführung des erfindungsgemäßen Verfahrens, umfassend einen Stromeinspeiseanschluss zum Anschließen der Stromabgabevorrichtung an ein Stromversorgungsnetz, einen Stromabgabeanschluss zum Anschließen eines Verbrauchers an die Stromabgabevorrichtung, Schaltmittel zum wahlweisen Freigeben oder Unterbrechen des Stromflusses vom Stromeinspeiseanschluss zum Stromabgabeanschluss, eine Messschaltung zur Messung des Stromverbrauchs des angeschlossenen Verbrauchers und eine Steuerschaltung zum Ansteuern der Schaltmittel, wobei die Stromabgabevorrichtung eine Datenkommunikationsschnittstelle aufweist, die mit der Messschaltung und der Steuerschaltung verbunden ist, um Daten zwischen der Mess- und Steuerschaltung und einer Verrechnungsstelle auszutauschen, wobei die Steuerschaltung ausgebildet ist, um die Schaltmittel zum Freigaben des Stromflusses anzusteuern, wenn über die Datenkommunikationsschnittstelle ein Freigabesignal erhalten wird und wobei die Messschaltung ausgebildet ist, um Stromverbrauchsmessdaten über die Datenkommunikationsschnittstelle an die Verrechnungsstelle zu übermitteln, und dass die Stromabgabevorrichtung weiters eine Dekodierungsschaltung aufweist, welche mit dem Stromabgabeanschluss verbunden ist, um eine über den Stromabgabeanschluss erhaltene, dem Verbraucher zugeordnete Verbraucherkennung auszulesen und über die Datenkommunikationsschnittstelle an die Verrechnungsstelle zu übermitteln.

Bevorzugt ist weiters ein an den Stromabgabeanschluss der Stromabgabevorrichtung anschließbarer elektronischer Speicher vorgesehen, der eine Verbraucherkennung gespeichert hat, und Übertragungsmittel zum Übertragen der Verbraucherkennung vom elektronischen Speicher über den Stromabgabeanschluss an die Dekodierungsschaltung.

Die Übertragungsmittel weisen bevorzugt eine Lasterzeugungseinrichtung auf, der die Verbraucherkennung aus dem elektronischen Speicher zugeführt ist, sodass ein die Verbraucherkennung codierendes Lastprofil erzeugbar ist.

Bevorzugt ist die Dekodierungsschaltung mit der Messschaltung verbunden und zum Auslesen eines von der Messschaltung erfassten elektrischen Lastprofils ausgebildet.

Um beliebige elektrische Verbraucher in einfacher Weise an die Stromabgabevorrichtung anschließen zu können, ist der Stromabgabeanschluss bevorzugt als Steckdose ausgebildet. Im Falle einer Ladestation für Elektrofahrzeuge kann die Steckdose z.B. als IEC 62196 Typ 2 ausgebildet sein.

Die Lasterzeugungseinrichtung kann bevorzugt in ein an den Stromabgabeanschluss der Stromabgabevorrichtung anschließbares Kabel oder dessen Stecker integriert bzw. zwischengeschaltet sein. Das Kabel kann z.B. als Ladekabel für ein Elektrofahrzeug ausgebildet sein und mit einer elektronischen Schaltung ausgestattet sein, die für die Erzeugung des Lastprofils geeignet ist und die einen elektronischen Speicher mit der Verbraucherkennung aufweist. Der Speicher kann hierbei bereits werkseitig mit einer eindeutigen Verbraucherkennung beschrieben sein, wobei der Teilnehmer die Verbraucherkennung in einem initialen Registrierungsverfahren seinem Verrechnungskonto zuordnen muss. Nach der Registrierung der Verbraucherkennung wird jede Stromentnahme über das an eine erfindungsgemäße Stromabgabevorrichtung angeschlossene Ladekabel dem Teilnehmer verrechnet.

Alternativ kann vorgesehen sein, dass die Lasterzeugungseinrichtung in den Verbraucher integriert ist, wobei hinsichtlich des Registrierungsverfahren analog vorgegangen werden kann wie oben beschrieben.

Ein weiterer Aspekt der Erfindung sieht ein System zur Abgabe von elektrischer Energie an elektrische Verbraucher vor, insbesondere zur Durchführung des erfindungsgemäßen Verfahrens, umfassend eine an ein Stromversorgungsnetz anschließbare erfindungsgemäße Stromabgabevorrichtung, eine als Verrechnungsstelle ausgebildete Datenverarbeitungseinrichtung, welche Teilnehmer, diesen zugeordnete Verbraucherkennungen und Verrechnungskonten gespeichert hat, wenigstens einen an den Stromabgabeanschluss der Stromabgabevorrichtung anschließbaren elektronischen Speicher, der eine Verbraucherkennung gespeichert hat, und Übertragungsmittel zum Übertragen der Verbraucherkennung vom elektronischen Speicher über den Stromabgabeanschluss an die Dekodierungsschaltung, wobei die Stromabgabevorrichtung derart mit der Verrechnungsstelle zusammenwirkt, dass die Verbraucherkennung von der Stromabgabevorrichtung an die Verrechnungsstelle übermittelt wird, dass in der Verrechnungsstelle überprüft wird, ob die Verbraucherkennung einem in der Verrechnungsstelle gespeicherten Teilnehmer zugeordnet ist und bei positiver Prüfung ein Freigabesignal an die Stromabgabevorrichtung übermittelt wird, um die Stromabgabe durch die Stromabgabevorrichtung freizugeben, wobei das dem Teilnehmer zugeordnete Verrechnungskonto mit dem gemessenen Stromverbrauch belastet wird.

Bezüglich der bevorzugten Ausbildung des erfindungsgemäßen Systems wird auf die entsprechenden Merkmale des erfindungsgemäßen Verfahrens und der erfindungsgemäßen Stromabgabevorrichtung verwiesen.

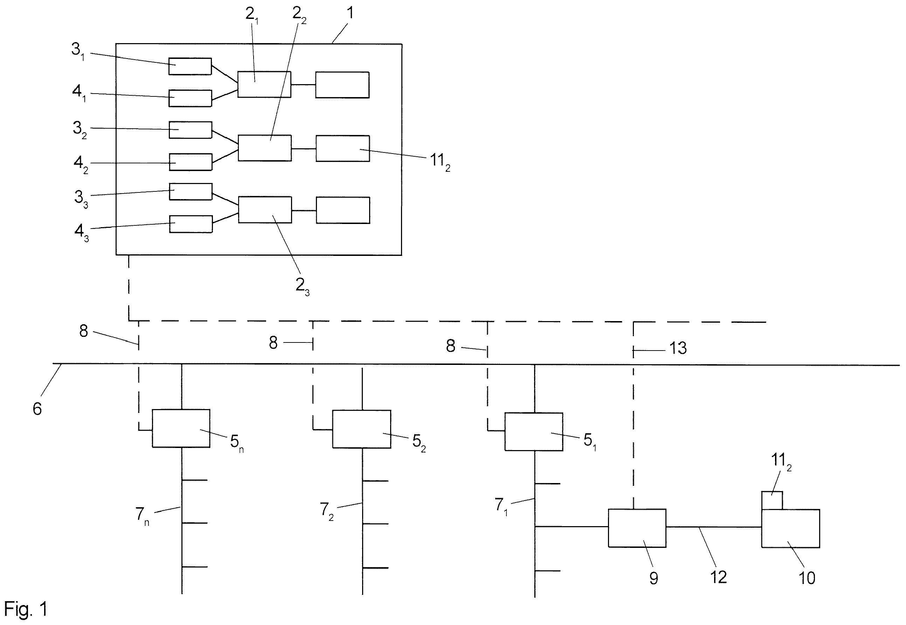

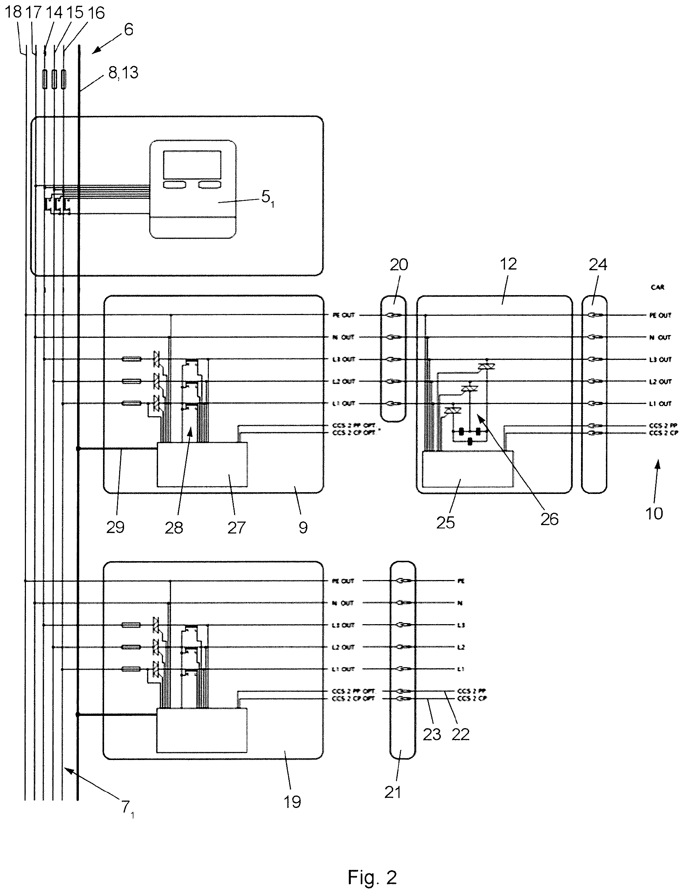

Die Erfindung wird nachfolgend anhand von in der Zeichnung schematisch dargestellten Ausführungsbeispielen näher erläutert. In dieser zeigen Fig. 1 ein Blockdiagramm des erfindungsgemäßen Systems und Fig. 2 ein Schaltbild eines Stromnetzes, in dem eine erfindungsgemäße Stromabgabevorrichtung angeordnet ist.

In Fig. 1 ist die Verrechnungsstelle eines Stromversorgungsunternehmens mit 1 bezeichnet, welche eine Datenbank aufweist, in der Teilnehmer 2₁, 2₂ ... 2ₙ gespeichert sind, denen jeweils ein Verrechnungskonto 3₁, 3₂ ... 3ₙ zugeordnet ist. Weiters ist den Teilnehmern jeweils wenigstens eine Stromzählerkennung 4₁, 4₂ ... 4ₙ zugeordnet, welche einen beim entsprechenden Teilnehmer installierten Stromzähler 5₁, 5₂ ... 5ₙ kennzeichnet.

Das Stromversorgungsunternehmen unterhält ein Stromversorgungsnetz 6, an welches verschiedene Gebäude, Haushalte, Unternehmen oder dgl. angeschlossen sind, wobei jeweils ein Stromzähler 5₁, 5₂ ... 5ₙ zwischengeschaltet ist, um den Stromverbrauch des dahinter liegenden Stromnetzes 7₁, 7₂ ... 7ₙ des Teilnehmers zu erfassen. Die Stromzähler 5₁, 5₂ ... 5ₙ sind bevorzugt als intelligente Stromzähler (Smart Meter) ausgebildet, sodass der gemessene Stromverbrauch über eine schematisch dargestellte Datenkommunikationsverbindung 8 an die Verrechnungsstelle 1 übermittelt werden kann. Der Stromzähler 5 sendet hierbei die ihm zugeordnete Stromzählerkennung 4 mit, sodass die in der Verrechnungsstelle 1 erhaltenen Stromzähler-Messdaten dem entsprechenden Teilnehmer 2 zugeordnet werden können. An das Stromnetz 7₁ ist nun (unter anderem) eine erfindungsgemäße Stromabgabevorrichtung 9 angeschlossen. Der Teilnehmer 2₁, welcher bezüglich des Stromzählers 5₁ mit dem Stromversorgungsunternehmen in einer Vertragsbeziehung steht, ist grundsätzlich verpflichtet, die für den Stromverbrauch seines Stromnetzes 7₁ anfallenden Kosten zu tragen. Die Stromabgabevorrichtung 9 ermöglicht es dem Teilnehmer 2₁ jedoch, anderen Teilnehmern den Anschluss elektrischer Verbraucher an sein Stromnetz 7₁ zu erlauben, ohne dass das Verrechnungskonto 3₁ des Teilnehmers 2₁ mit den entsprechenden Kosten belastet wird.

An die Stromabgabevorrichtung 9 ist ein elektrischer Verbraucher 10 angeschlossen, dem eine Verbraucherkennung 11₂ zugeordnet ist, die in der Datenbank der Verrechnungsstelle dem Teilnehmer 2₂ zugeordnet ist. Dies führt, wie nachfolgend noch näher beschrieben werden wird, dazu, dass die vom elektrischen Verbraucher 10 verursachten Stromkosten nicht dem Teilnehmer 2₁, sondern dem Teilnehmer 2₂ verrechnet werden. Hierzu ist der elektrische Verbraucher 10 über ein Kabel 12 an die Stromabgabevorrichtung 9 angeschlossen, wobei die Verbraucherkennung 11₂ im Fall eines Strombezugsbedarfs über das Kabel 12 an die Stromabgabevorrichtung 9 übermittelt wird. Die Verbraucherkennung 11₂ kann hierauf entweder direkt von der Stromabgabevorrichtung 9 über eine Datenkommunikationsverbindung 13 an die Verrechnungsstelle 1 übermittelt oder an den Stromzähler 5₁ weitergeleitet und von diesem an die Verrechnungsstelle 1 übermittelt werden. In der Verrechnungsstelle 1 wird überprüft, ob die Verbraucherkennung 11₂ einem in der Verrechnungsstelle 1 gespeicherten Teilnehmer zugeordnet ist, wobei im vorliegenden Beispiel der Teilnehmer 2₂ identifiziert wird, und bei positiver Prüfung wird über die Datenkommunikationsverbindung 8 oder 13 ein Freigabesignal an die Stromabgabevorrichtung 9 übermittelt, um die Stromabgabe durch die Stromabgabevorrichtung 9 freizugeben. Der Stromverbraucher des elektrischen Verbrauchers 10 wird in der Folge von einer Strommessvorrichtung (in Fig. 1 nicht dargestellt) erfasst und an die Verrechnungsstelle 1 übermittelt, wobei das dem Teilnehmer 2₂ zugeordnete Verrechnungskonto 3₂ mit dem gemessenen Stromverbrauch belastet wird. Dem Verrechnungskonto 3₁ des Teilnehmers 2₁ hingegen wird der gemessene Stromverbrauch gutgeschrieben.

In Fig. 2 ist ersichtlich, dass das Stromversorgungsnetz die Phasenleiter 14, 15, 16, einen Nullleiter 17 sowie die Erdung 18 umfasst. Der Stromzähler 5₁ ist an die Phasenleiter 14, 15, 16 und an den Nullleiter 17 angeschlossen, um den hinter dem Stromzähler 5₁ im Stromnetz 7₁ anfallenden Stromverbrauch zu messen. An das Stromnetz 7₁ sind eine erfindungsgemäße Stromabgabevorrichtung 9 sowie eine weitere erfindungsgemäße Stromabgabevorrichtung 19 angeschlossen. Die Stromabgabevorrichtungen 9 und 19 umfassen stromabgabeseitig jeweils eine Steckdose 20 bzw. 21, welche den Anschluss eines Verbrauchers 10 erlauben. Wenn es sich bei dem Verbraucher 10 um ein Elektrofahrzeug handelt, welchem Ladestrom zur Verfügung gestellt werden soll, kann die Steckdose 21 zusätzlich zu Anschlüssen für drei Phasenleiter, einem Nullleiter und der Erdung einen PP-Kontakt 22 (Proximity-Pilot), um die Anwesenheit des Steckers festzustellen, und einen CP-Kontakt 23 (Control Pilot) umfassen, um die erforderlichen Steuersignale zwischen dem Elektrofahrzeug und der als Ladestation fungierenden Stromabgabevorrichtung 19 auszutauschen.

Am Beispiel der Stromabgabevorrichtung 9 ist nun dargestellt, dass an die Steckdose 20 ein Ladekabel 12 angeschlossen ist, welches fahrzeugseitig einen Stecker 24 für die Ladebuchse des Fahrzeugs aufweist. Das Kabel 12 ist mit einer elektronischen Schaltung 25 ausgestattet, welche einen Speicher für eine Verbraucherkennung 11₂ und eine Lasterzeugungseinrichtung umfasst, dem die Verbraucherkennung 11₂ aus dem elektronischen Speicher zugeführt ist, sodass ein die Verbraucherkennung codierendes Lastprofil erzeugt werden kann. Die Lasterzeugungseinrichtung ist hierbei über eine Dreiecksschaltung 26 an die drei Phasenleiter des Kabels 12 angeschlossen.

Das erzeugte Lastprofil ist mittels einer Mess- und Steuerschaltung 27 der Stromabgabevorrichtung 9 detektierbar. Die Mess- und Steuerschaltung 27 umfasst eine Dekodierungsschaltung zum Auslesen eines von der Mess- und Steuerschaltung 27 erfassten elektrischen Lastprofils. Auf diese Weise wird die Verbraucherkennung 11₂ an die Mess- und Steuerschaltung 27 und von dieser über die Datenkommunikationsschnittstelle 29 und über die Datenkommunikationsverbindung 8 oder 13 an die Verrechnungsstelle 1 übermittelt. Nach Erhalt eines Freigabesignals von der Verrechnungsstelle 1 gibt die Mess- und Steuerschaltung 27 den Stromfluss vom Stromnetz 7₁ über die Stromabgabevorrichtung 9 zur Steckdose 20 frei, sodass der Ladevorgang beginnen kann. Die Mess- und Steuerschaltung 27 ist über eine induktive Messanbindung 28 an die drei Phasenleiter angekoppelt, sodass der vom elektrischen Verbraucher 10 konsumierte Strom erfasst und in der Folge gemeinsam mit der Verbraucherkennung 11₂ und der Stromzählerkennung 4₁ an die Verrechnungsstelle 1 übermittelt wird. Die Mitübermittlung der Verbraucherkennung 11₂ und der Stromzählerkennung 4₁ erlaubt es der Verrechnungsstelle 1 das Verrechnungskonto 3₂ des Teilnehmers 2₂, welchem die Verbraucherkennung 11₂ zugeordnet ist, mit dem entsprechenden Stromverbrauch zu belasten und den Stromverbrauch dem Verrechnungskonto 3₁ des Teilnehmers 2₁, welchem die Stromzählerkennung 4₁ zugeordnet ist, gutzuschreiben.

## Patentansprüche

1. Verfahren zur Abgabe von elektrischer Energie an elektrische Verbraucher (10) unter Verwendung wenigstens einer an ein Stromversorgungsnetz (6) angeschlossenen Stromabgabevorrichtung (9), an welche ein elektrischer Verbraucher (10) über ein Kabel (12) anschließbar ist, wobei der Stromverbrauch des elektrischen Verbrauchers (10) gemessen und der gemessene Stromverbrauch an eine Verrechnungsstelle (1) übermittelt wird, **dadurch gekennzeichnet, dass** dem Verbraucher (10) eine Verbraucherkennung (11₂) zugeordnet ist, die über das Kabel (12) an die Stromabgabevorrichtung (9) und weiter an die Verrechnungsstelle (1) übermittelt wird, dass in der Verrechnungsstelle (1) überprüft wird, ob die Verbraucherkennung (11₂) einem in der Verrechnungsstelle (1) gespeicherten Teilnehmer (2₂) zugeordnet ist und bei positiver Prüfung ein Freigabesignal an die Stromabgabevorrichtung (9) übermittelt wird, um die Stromabgabe durch die Stromabgabevorrichtung (9) freizugeben, wobei ein dem Teilnehmer (2₂) zugeordnetes Verrechnungskonto (3₂) mit dem gemessenen Stromverbrauch belastet wird.

2. Verfahren nach Anspruch 1, **dadurch gekennzeichnet, dass** die Verbraucherkennung (11₂) über ein elektrisches Lastprofil übermittelt wird.

3. Verfahren nach Anspruch 1 oder 2, **dadurch gekennzeichnet, dass** die Messung des Stromverbrauchs des Verbrauchers (10) in der Stromabgabevorrichtung (9) oder im Verbraucher (10) vorgenommen wird.

4. Verfahren nach Anspruch 1 oder 2, **dadurch gekennzeichnet, dass** die Messung des Stromverbrauchs des Verbrauchers (10) in der Stromabgabevorrichtung (9) und zusätzlich im Verbraucher (10) vorgenommen wird und dass der in der Stromabgabevorrichtung (9) und der im Verbraucher (10) gemessene Stromverbrauch verglichen wird und bei einer Abweichung eine Fehlermeldung ausgegeben und/oder die Stromabgabe durch die Stromabgabevorrichtung (9) unterbrochen wird.

5. Verfahren nach einem der Ansprüche 1 bis 4, **dadurch gekennzeichnet, dass** die Stromabgabevorrichtung (9) im Messbereich eines Stromzählers (5₁) angeordnet ist, dessen Messwerte der Verrechnungsstelle (1) übermittelt werden und ein dem Stromzähler (5₁) zugeordnetes Verrechnungskonto (3₁) entsprechend den Messwerten belastet wird, wobei der Stromverbrauch des elektrischen Verbrauchers (10) dem dem Stromzähler (5₁) zugeordneten Verrechnungskonto (3₁) gutgeschrieben wird.

6. Verfahren nach einem der Ansprüche 1 bis 5, **dadurch gekennzeichnet, dass** dem Stromzähler (5₁) eine Stromzählerkennung (4₁) zugeordnet ist, die gemeinsam mit der Verbraucherkennung (11₂) an die Verrechnungsstelle (1) übermittelt wird.

7. Verfahren nach einem der Ansprüche 1 bis 6, **dadurch gekennzeichnet, dass** die Übermittlung der Verbraucherkennung (11₂) und ggf. der Stromzählerkennung (4₁) an die Verrechnungsstelle (1), insbesondere von der Stromabgabevorrichtung (9) an die Verrechnungsstelle (1), über das Stromversorgungsnetz (6) oder über ein mobiles Telekommunikationsnetz erfolgt.

8. Stromabgabevorrichtung, insbesondere zur Durchführung eines Verfahrens nach einem der Ansprüche 1 bis 7, umfassend einen Stromeinspeiseanschluss zum Anschließen der Stromabgabevorrichtung (9) an ein Stromversorgungsnetz (6), einen Stromabgabeanschluss zum Anschließen eines elektrischen Verbrauchers (10) an die Stromabgabevorrichtung (9), Schaltmittel zum wahlweisen Freigeben oder Unterbrechen des Stromflusses vom Stromeinspeiseanschluss zum Stromabgabeanschluss, eine Messschaltung (27) zur Messung des Stromverbrauchs des angeschlossenen Verbrauchers (10) und eine Steuerschaltung (27) zum Ansteuern der Schaltmittel, **dadurch gekennzeichnet, dass** die Stromabgabevorrichtung (9) eine Datenkommunikationsschnittstelle (29) aufweist, die mit der Messschaltung (27) und der Steuerschaltung (27) verbunden ist, um Daten zwischen der Mess- und Steuerschaltung (27) und einer Verrechnungsstelle (1) auszutauschen, wobei die Steuerschaltung (27) ausgebildet ist, um die Schaltmittel zum Freigeben des Stromflusses anzusteuern, wenn über die Datenkommunikationsschnittstelle (29) ein Freigabesignal erhalten wird und wobei die Messschaltung (27) ausgebildet ist, um Stromverbrauchsmessdaten über die Datenkommunikationsschnittstelle (29) an die Verrechnungsstelle (1) zu übermitteln, und dass die Stromabgabevorrichtung (9) weiters eine Dekodierungsschaltung aufweist, welche mit dem Stromabgabeanschluss verbunden ist, um eine über den Stromabgabeanschluss erhaltene, dem Verbraucher (10) zugeordnete Verbraucherkennung (11₂) auszulesen und über die Datenkommunikationsschnittstelle (29) an die Verrechnungsstelle (1) zu übermitteln.

9. Stromabgabevorrichtung nach Anspruch 8, **dadurch gekennzeichnet, dass** die Stromabgabevorrichtung (9) einen an den Stromabgabeanschluss der Stromabgabevorrichtung (9) anschließbaren elektronischen Speicher, der die Verbraucherkennung (11₂) gespeichert hat, und Übertragungsmittel zum Übertragen der Verbraucherkennung (11₂) vom elektronischen Speicher über den Stromabgabeanschluss an die Dekodierungsschaltung umfasst.

10. Stromabgabevorrichtung nach Anspruch 9, **dadurch gekennzeichnet, dass** die Übertragungsmittel eine Lasterzeugungseinrichtung (25) aufweisen, dem die Verbraucherkennung (11₂) aus dem elektronischen Speicher zugeführt ist, sodass ein die Verbraucherkennung (11₂) codierendes Lastprofil erzeugbar ist.

11. Stromabgabevorrichtung nach Anspruch 8, 9 oder 10, **dadurch gekennzeichnet, dass** die Dekodierungsschaltung mit der Messschaltung (27) verbunden ist und zum Auslesen eines von der Messschaltung (27) erfassten elektrischen Lastprofils ausgebildet ist.

12. Stromabgabevorrichtung nach einem der Ansprüche 8 bis 11, **dadurch gekennzeichnet, dass** der Stromabgabeanschluss als Steckdose (20) ausgebildet ist.

13. Stromabgabevorrichtung nach einem der Ansprüche 10 bis 12, **dadurch gekennzeichnet, dass** die Lasterzeugungseinrichtung (25) in ein an den Stromabgabeanschluss der Stromabgabevorrichtung (9) anschließbares Kabel (12) oder dessen Stecker integriert bzw. zwischengeschaltet ist.

14. Stromabgabevorrichtung nach einem der Ansprüche 10 bis 13, **dadurch gekennzeichnet, dass** die Lasterzeugungseinrichtung (25) in den Verbraucher (10) integriert ist.

15. System zur Abgabe von elektrischer Energie an elektrische Verbraucher (10), insbesondere zur Durchführung eines Verfahrens nach einem der Ansprüche 1 bis 7, umfassend eine an ein Stromversorgungsnetz (6) anschließbare Stromabgabevorrichtung (9) nach einem der Ansprüche 8 bis 14, eine als Verrechnungsstelle (1) ausgebildete Datenverarbeitungseinrichtung, welche Teilnehmer (2₁, 2₂, 2₃), diesen zugeordnete Verbraucherkennungen (11₂) und Verrechnungskonten (3₁, 3₂, 3₃) gespeichert hat, wenigstens einen an den Stromabgabeanschluss der Stromabgabevorrichtung (9) anschließbaren elektronischen Speicher, der eine Verbraucherkennung (11₂) gespeichert hat, und Übertragungsmittel zum Übertragen der Verbraucherkennung (11₂) vom elektronischen Speicher über den Stromabgabeanschluss an die Dekodierungsschaltung, wobei die Stromabgabevorrichtung (9) derart mit der Verrechnungsstelle (1) zusammenwirkt, dass die Verbraucherkennung (11₂) von der Stromabgabevorrichtung (9) an die Verrechnungsstelle (1) übermittelt wird, dass in der Verrechnungsstelle (1) überprüft wird, ob die Verbraucherkennung (11₂) einem in der Verrechnungsstelle (1) gespeicherten Teilnehmer (2₂) zugeordnet ist und bei positiver Prüfung ein Freigabesignal an die Stromabgabevorrichtung (9) übermittelt wird, um die Stromabgabe durch die Stromabgabevorrichtung (9) freizugeben, wobei das dem Teilnehmer (2₂) zugeordnete Verrechnungskonto (3₂) mit dem gemessenen Stromverbrauch belastet wird.
